# EUROPEAN PATENT SPECIFICATION

(11) **EP 4 078 392 B1**
(45) Date of publication and mention of the grant of the patent: **10.05.2023**
(21) Application number: 21706456.7
(22) Date of filing: 27.01.2021
(51) Int. Cl.: G06F 16/188, G06F 16/14, G06F 9/455, G06F 21/53, G06F 21/78

(54) **EFFICIENTLY PROVIDING A GUEST CONTEXT ACCESS TO FILE CONTENT AT A HOST CONTEXT**
EFFIZIENTE BEREITSTELLUNG EINES GASTKONTEXTZUGRIFFS AUF DATEIINHALT IN EINEM HOST-KONTEXT
FOURNITURE EFFICACE D'UN ACCÈS AU CONTEXTE D'INVITÉ À UN CONTENU DE FICHIER AU NIVEAU D'UN CONTEXTE D'HÔTE

(30) Priority: 30.01.2020 LU 101621
(43) Date of publication of application: 26.10.2022
(73) Proprietor: Microsoft Technology Licensing, LLC, Redmond, WA 98052-6399 (US)
(72) Inventor: XIE, Ping, Redmond, Washington 98052 (US); BRENDER, Scott, Redmond, Washington 98052 (US); CHAGANI, Shaheed Gulamabbas, Redmond, Washington 98052 (US); STARKS, John Andrew, Redmond, Washington 98052 (US); KISHAN, Arun U., Redmond, Washington 98052 (US)
(74) Representative: CMS Cameron McKenna Nabarro Olswang LLP
(86) International application number: PCT/US2021/015297
(87) International publication number: WO 2021/154859

(56) References cited:
- US-A1- 2010 088 328
- US-A1- 2017 123 996
- US-A1- 2019 065 096
- US-A1- 2019 213 026
- US-A1- 2019 370 436

## Description

### TECHNICAL FIELD

The present disclosure relates to systems, methods, and devices for efficiently sharing data from a host context of a computer system to a guest context of the computer system.

### BACKGROUND

It is common for modem computer systems to operate different privilege contexts using containerization technologies. In general, containerization refers to the ability of a computer system to provide guest contexts (or partitions) in which one or more processes or even an entire operating system (OS) run in relative isolation. For instance, OS-level virtualization technologies refer to containerization in which guest contexts are isolated user space instances created by a host OS kernel, and in which user-space processes can run on top of that kernel in isolation from other guest contexts created by the same kernel. Examples of OS-level virtualization technologies include containers (DOCKER), Zones (SOLARIS), and j ails (FREEBSD). Hypervisor-based virtualization technologies refer to containerization in which guest contexts are virtual hardware machines created by a host OS that includes a hypervisor, and in which an entire additional OS can run in isolation from other virtual machines. Examples of hypervisor-based virtualization technologies include HYPER-V (MICROSOFT), XEN (LINUX), VMWARE, VIRTUALBOX (ORACLE), and BHYVE (FREEBSD).

Regardless of the type of container used, a container generally needs access to one or more files. In many cases, these files are installed into the container itself. For instance, when creating an OS-level container, a host kernel might associate a subset of a filesystem hierarchy assessible to the kernel with the container, into which files for the container can be installed. When creating hypervisor-based containers, a hypervisor might associate virtual hard disk image with the container, into which files for the container can be installed. In either case, if the same file is used by multiple containers, or if the same file is used by both the host and a container, the contents of that file are duplicated. In some cases, a container may need to access files stored external to its context. This is traditionally handled via file sharing servers and clients. However, this means that access to files, including file metadata, requires time consuming and inefficient context switches between the host and container. For many metadata operations, such as directory listings, this can result in a great number of context switches, greatly impacting the performance of those operations.
US 2010/088328 A1 describes a file management system includes a host computer having one or more virtual machines, a switching layer computer configured to manage a namespace map for the virtual machines in the host computer, and a central storage unit. The host computer is connected indirectly to the central storage unit through an in-band IO path that includes the switching layer computer and directly to the central storage unit through an out-of-band IO path. When a virtual machines issues a file operation, a file operation including a data operation is routed to the central storage unit along an out-of-band IO path and a file operation including a metadata operation is routed to the central storage unit along an in-band IO path that includes the switching layer computer.
US 2017/123996 A1 describes a method includes receiving a request from a guest virtual machine for a file from a host. The method further includes, at the host determining that the file can be directly mapped to a physical memory location for virtual machines requesting access to the file. The method further includes, at the host, providing guest physical memory backed by the file flapping in host virtual memory.
US 2019/370436 A1 describes techniques for memory assignment for guest operating systems. In one embodiment, a method includes generating a license blob containing data representing a product key copied from a record of license information in the host storage upon receiving a user request to launch an application in the guest operating system. The method also includes storing the generated license blob in a random memory location accessible by the guest operating system. The guest operating system can then query the license blob for permission to launch the application and launching the application in the guest operating system without having a separate product key for the guest operating system.
US 2019/213026 A1 describes a system and method of communicating between a hypervisor and virtual machines using object agents within the hypervisor and the virtual machines. Further, the hypervisor and virtual machines include similar datastore mappings that allow the hypervisor and virtual machines to communicate with each other. The object agent of a virtual machine communicates information corresponding to a first object to the object agent of the hypervisor, and the object agent of the hypervisor updates a datastore mapping of the hypervisor. The hypervisor then communicates the information corresponding to the first object to an object agent of another virtual machine.
US 2019/065096 A1 describes techniques for providing a distributed file storage system that permits containerized applications running in distinct container hosts to read/write to the same storage volume. In one embodiment, a file sharing volume service is configured to use a container orchestrator to start a respective file server for each shared storage volume mounted for use by user-level containerized application(s). The file sharing volume service further manages the file server by creating and updating a metadata entry that specifies (1) a count of a number of times the shared storage volume has been mounted for use, and (2) a port number exposed for use in mounting path(s) to access the shared storage volume. Upon receiving a request to run a containerized application with the shared storage volume, the file sharing volume service updates the metadata entry to increase the count, and retrieves and uses the port number to mount path(s) for accessing the shared storage volume.

### BRIEF SUMMARY

The invention is set out in the appended set of claims.

At least some embodiments described herein are directed to "contentless" or "dataless" container images that include file metadata for one or more contentless files within a filesystem namespace, and that lack the actual contents of those file(s). At least some embodiments described herein are directed to the use of these container images in a computer system having a guest context (container) and a host context. The embodiments described herein enable the guest context to mount a filesystem namespace from a container image, and to use the metadata contained in the container image to perform filesystem operations (e.g., directory listings, viewing and editing file properties, etc.) involving contentless files contained in the namespace without context switching to the host context. Thus, the embodiments described herein enable the guest context to consume and manage file metadata without incurring the performance penalties of context switching to the host context. The embodiments described herein also enable the guest context to request the contents of these contentless file(s) from the host context and enable the host context to locate appropriate file contents and provide those contents to the guest context. Thus, the embodiments described herein also enable the guest and host contexts to share common file content data, which avoids duplication of data at the computer system, thereby conserving memory and storage resources at the computer system. Accordingly, the embodiments described herein provide a dual technical advantage of (i) enabling a guest context to perform metadata operations involving a file stored external to the guest context without incurring context switches to a host context, and (ii) avoiding duplication of that file (both in storage and memory) when it is used by multiple contexts.

In some embodiments, methods, systems, and computer program products use metadata for a contentless file to provide a guest context access to file content. Within a guest context at a computer system, a first filesystem namespace is mounted from a container image. The container image, which lacks content of a first file contained within the first filesystem namespace, includes (i) metadata defining one or more filesystem properties of the first file, and (ii) mapping data that includes information usable to identify a second file within a second filesystem namespace that is external to the guest context, and from which the content of the first file is obtainable. Based on the one or more filesystem properties of the first file, a filesystem operation involving the first file is performed without switching to a host context at the computer system. Also based on the one or more filesystem properties of the first file, a requested access to the content of the first file is responded to. The responding includes, based on the mapping data, communicating to the host context a request for the host context to supply the content of the first file to the guest context. The responding also includes, after returning from a context switch to the host context, responding to the requested access based at least on supplying content of the second file from one or more guest context memory pages, the one or more guest context memory pages mapped to one or more host context memory pages containing the content of the second file.

This summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:
Figure 1 illustrates an example computer architecture that facilitates using metadata for a contentless file to provide a guest context access to file content;
Figure 2 illustrates an example of a container image, and the use thereof within the computer architecture of Figure 1; and
Figure 3 illustrates a flow chart of an example method for using metadata for a contentless file to provide a guest context access to file content.

### DETAILED DESCRIPTION

At least some embodiments described herein are directed to "contentless" or "dataless" container images that include file metadata for one or more contentless files within a filesystem namespace, and that lack the actual contents of those file(s). At least some embodiments described herein are directed to the use of these container images in a computer system having a guest context (container) and a host context. The embodiments described herein enable the guest context to mount a filesystem namespace from a container image, and to use the metadata contained in the container image to perform filesystem operations (e.g., directory listings, viewing and editing file properties, etc.) involving contentless files contained in the namespace without context switching to the host context. Thus, the embodiments described herein enable the guest context to consume and manage file metadata without incurring the performance penalties of context switching to the host context. The embodiments described herein also enable the guest context to request the contents of these contentless file(s) from the host context and enable the host context to locate appropriate file contents and provide those contents to the guest context. Thus, the embodiments described herein also enable the guest and host contexts to share common file content data, which avoids duplication of data at the computer system, thereby conserving memory and storage resources at the computer system. Accordingly, the embodiments described herein provide a dual technical advantage of (i) enabling a guest context to perform metadata operations involving a file stored external to the guest context without incurring context switches to a host context, and (ii) avoiding duplication of that file (both in storage and memory) when it is used by multiple contexts.

In some embodiments, methods, systems, and computer program products use metadata for a contentless file to provide a guest context access to file content. Within a guest context at a computer system, a first filesystem namespace is mounted from a container image. The container image, which lacks content of a first file contained within the first filesystem namespace, includes (i) metadata defining one or more filesystem properties of the first file, and (ii) mapping data that includes information usable to identify a second file within a second filesystem namespace that is external to the guest context, and from which the content of the first file is obtainable. Based on the one or more filesystem properties of the first file, a filesystem operation involving the first file is performed without switching to a host context at the computer system. Also based on the one or more filesystem properties of the first file, a requested access to the content of the first file is responded to. The responding includes, based on the mapping data, communicating to the host context a request for the host context to supply the content of the first file to the guest context. The responding also includes, after returning from a context switch to the host context, responding to the requested access based at least on supplying content of the second file from one or more guest context memory pages, the one or more guest context memory pages mapped to one or more host context memory pages containing the content of the second file.

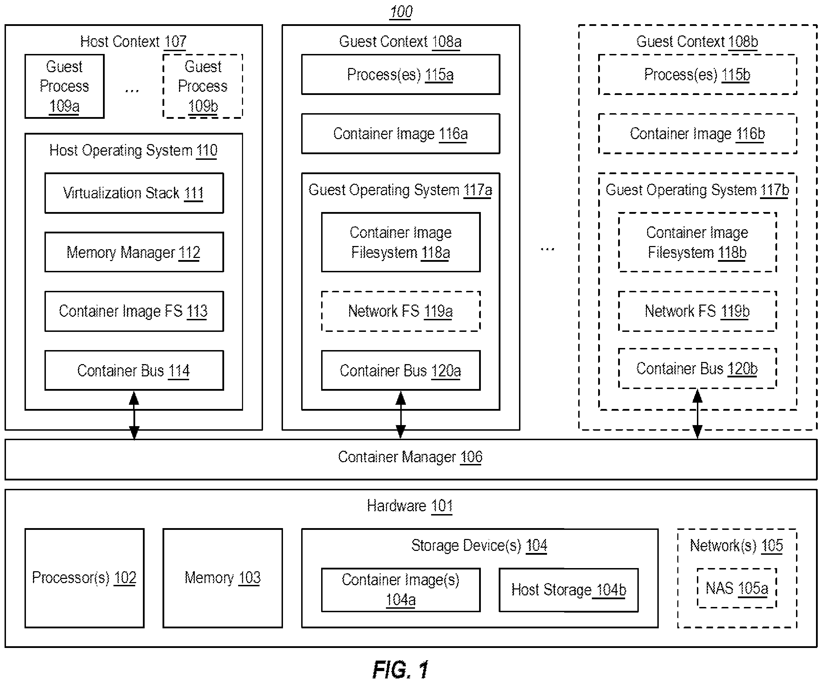

Figure 1 illustrates an example computer architecture 100 that facilitates using metadata for a contentless file to provide a guest context access to file content. As illustrated, computer architecture 100 includes computer hardware 101, including, for example, one or more processors 102, one or more memory devices 103 (e.g., system memory), one or more durable storage device(s) 104, and one or more network devices 105. As also shown, a container manager 106 is executed by the hardware 101. The container manager 106 can represent any software layer that creates and manages different security contexts, such as a host context 107 and one or more guest contexts 108 (e.g., guest contexts 108a and 108b). In embodiments, the container manager 106 is a hypervisor (e.g., HYPER-V, XEN, BHYVE, etc.) that creates and manages virtual machine containers. However, it will be appreciated by one of ordinary skill in the art that principles described herein might operate in different types of container environments, such as OS-level virtualization technologies (e.g., DOCKER, BSD jails, etc.) that can manage which memory pages are mapped to a container, or to files accessed by the container, and this disclosure is therefore not limited to use of a hypervisor-type container manager 106.

In embodiments, the container manager 106 grants the host context 107 elevated privileges relative to any guest contexts 108. These elevated privileges include, for example, generally unrestricted access to the hardware 101 and the ability to instantiate, regulate, and destroy the guest contexts 108. As shown, the host context 107 executes a host OS 110, including a virtualization stack 111. In connection with the container manager 106, the host OS 110 uses the virtualization stack 111 to instantiate, regulate, and destroy the guest contexts 108.

As shown, the host OS 110 can instantiate one or more guest processes 109 within the host context 107, each guest process 109 corresponding to a different guest context 108. For example, in Figure 1, guest process 109a corresponds to guest context 108a, and guest process 109b (if present) corresponds to guest context 108b (if present). In embodiments, each guest process 109 is instantiated by the virtualization stack 111 to host a memory address space for its corresponding guest context 108. This memory space is viewed by a corresponding guest context 108 as being the guest context's physical address space. For example, a memory manager 112 of the host OS 110 can maintain a mapping between physical memory addresses in memory device(s) 103 (i.e., host-physical memory addresses, or HPA's) to virtual memory addresses (i.e., host-virtual memory addresses, or HVA's). Then, when instantiating a guest context 108, the memory manager 112 can allocate host-virtual memory addresses to the guest process 109 for this guest context 108. From the perspective of the guest context 108, these allocated host-virtual memory addresses are viewed as being physical memory addresses (i.e., guest-physical memory addresses, or GPA's). Use of "virtual address-backed" (VA-backed) virtual machines such as these give the host's memory manager 112 essentially the same flexibility to allocate physical memory to-and deallocate physical memory from-guest contexts 108 as it has for allocating and deallocating memory for any other process.

Each guest context 108 is shown as including a corresponding guest OS 117 (e.g., guest OS 117a for guest context 108a, and guest OS 117b for guest context 108b) and executing one or more process(es) 115 (e.g., process(es) 115a in guest context 108a and process(es) 115b in guest context 108b) using that guest OS 116. These guest OS's 117 may be the same type of OS, or they may be different types of OS's. For example, guest OS 117a and guest OS 117b might both be a WINDOWS OS, or guest OS 117a might also be a WINDOWS OS while guest OS 117b is a LINUX OS. In addition, the guest OS's 117 may be the same type of OS as the host OS 110, or they may be different types of OS's.

In Figure 1, the host OS 110 is shown as including a container bus 114, while each guest OS is also shown as including a container bus 120 (e.g., container bus 120a in guest OS 117a and container bus 120b in guest OS 117b). In embodiments, these container buses 114, 120 enable different contexts to communicate with each other through the container manager 106. For example, guest context 108a uses container bus 120a to communicate with the host context 107 via the host context's container bus 114.

In Figure 1, a guest context 108 can include a container image 116 (e.g., container image 116a in guest context 108a and container image 116b in guest context 108b). In embodiments, container images 116 are stored within container image(s) 104a in storage device(s) 104, or are available over the network(s) 105 (e.g., from network-attached storage 105a), and are accessed by a guest context 108 via the container manager 106. In addition, guest OS's 117 can include a container image filesystem 118 (e.g., container image filesystem 118a in guest OS 117a and container image filesystem 118b in guest OS 117b), and the host OS 110 may also include a container image filesystem 113. As briefly mentioned, embodiments herein enable a guest context 108 to consume and manage file metadata from a container image 116 in the guest context 108 without incurring the performance penalties of context switching to the host context 107. In addition, the guest context 108 can request the contents of contentless file(s) described in a container image 116 from the host context 107, enabling the guest context 108 and the host context 107 to share common file content data. This avoids duplication of file content data and conserves memory resources (e.g., in memory device(s) 103) and storage resources (e.g., in storage device(s) 104). For example, a container image 116 of a guest context might contain a contentless file whose content is stored in the host storage 104b of the storage device(s) 104, or that is otherwise accessible to the host context 107 over the network(s) 105.

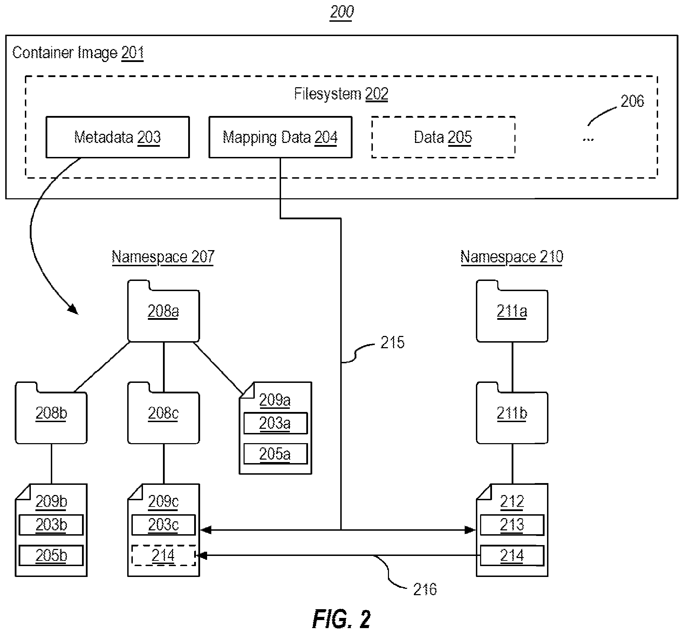

Figure 2 illustrates an example 200 of a container image, such as container image 116a, 116b of Figure 1, and the use thereof within computer architecture 100. In particular, Figure 2 shows that a container image 201 can define different regions, including a metadata region 203 and a mapping data region 204. As indicated by the ellipses 206, in embodiments the container image 201 includes any number of regions, such as the illustrated data region 205. In embodiments, these regions are embodied as files (e.g., one per region) on a filesystem 202 contained within the container image 201, though in some examples they take any number of other forms such as loose files in a distribution or archive file format (e.g., a tarball or a zip archive), data stored in a database format, etc.

In embodiments, container image 201 is configured to enable a container image filesystem (e.g., 113 and/or 118 in Figure 1) to mount and interact with a filesystem namespace defined by the container image 201. For example, the metadata region 203 can define filesystem metadata, such as hierarchy of files and directories, including filesystem properties for objects within that hierarchy. In embodiments, for individual files and/or directories, the metadata region 203 defines one or more of an object name, a created time, a modified time, an accessed time, a set of permissions, and the like. In embodiments, a container image 201 lacks the actual contents of one or more of these files. In these cases, the mapping data region 204 of the container image 201 includes information usable to identify, for each "contentless" file defined in the metadata region 203, an external file whose content is supplied as the contentless file's omitted content. In embodiments, a container image 201 includes the actual contents for some files as well. In one example, such content is stored in the data region 205, if present.

As will be appreciated by one of ordinary skill in the art, omitting file content data from a container image is advantageous if the namespace defined by that container image contains files that would also exist elsewhere within computer architecture 100. For example, suppose that a namespace defined by container image 116a comprise files for guest OS 117a, and that guest OS 117a is the same OS as host OS 110. In this situation, the host context 107 would likely need to store and access those same files (e.g., using host storage 104b). Thus, rather than duplicating the contents of those files within container image 116a, it is advantageous for those files to be made contentless within container image 116a, with their content being accessed from host storage 104b. This conserves both storage resources (e.g., because the content of those files need only within host storage 104b, and need not be duplicated within container image(s) 104a) and memory resources (e.g., because the host context 107 can share a copy that file content within the host's memory space with guest context 108a, eliminating the need for the guest context 108a to also load the file content into its own memory space). These benefits are multiplied when multiple guest contexts 108 use the same OS as host OS 110, since a single copy of file contents is made available to multiple guest contexts at once, using the same memory within memory device(s) 103. As another example, if multiple guest contexts 108 utilize the same application data files, it is possible to use contentless files within those context's container images 116 to access a single copy of those data files (e.g., within host storage 104b, aNAS 105a, etc.). Again, these multiple guest contexts 108 are able to access that content from a single copy stored in memory.

Regardless of whether or not a file has associated content stored within the container image 201, a container image filesystem 113 at a guest context 108 can perform many filesystem operations on that file based on the metadata contained within the metadata region 203. In embodiments, these operations include one or more of enumerating the file within a directory listing, reading one or more filesystem attributes for the file, writing/updating one or more filesystem attributes for the file, deleting the file, moving the file to a different directory, etc. In these cases, the container image filesystem 113 can perform those operations without triggering an expensive context switch from the guest context 108 to the host context 107. If a container image filesystem 113 at a guest context 108 attempts to access the content of a contentless file, however, the guest context 108 engages with the host context 107 in order to obtain appropriate file content from the host context 107, which generally involves a context switch to the host context 107. In embodiments, this file content is located by the host context 107 based on data in the mapping data region 204.

Figure 2 also illustrates an example filesystem namespace 207 which, in example 200, is defined by container image 201 (e.g., using metadata region 203). In this example 200, namespace 207 includes a filesystem hierarchy comprising three directories 208 (i.e., directories 208a-208c) and three files 209 (i.e., files 209a-209c). Figure 2 illustrates that objects within this namespace 207 can be defined, at least in part, using filesystem metadata contained within the metadata region 203. For instance, file 209a is shown as being associated with (and at least partially defined by) a metadata portion 203a, file 209b is shown as being associated with (and at least partially defined by) a metadata portion 203b, and file 209c is shown as being associated with (and at least partially defined by) a metadata portion 203c. Although not shown in example 200, directories may similarly be associated with/defined by metadata portions.

In the example 200, files 209a and 209b are shown as being associated with corresponding content that is included within the container image 201 (e.g., within data region 205). For example, file 209a is shown as being associated with a data portion 205a, and file 209b is shown as being associated with a data portion 205b. However, in example 200 file 209c lacks corresponding content within the container image 201, as indicated by the box representing the file's content portion being drawn with broken lines. As such, file 209c is a "contentless" file within container image 201. Since file 209c is contentless, the mapping data 204 in container image 201 includes information usable to identify content for file 209c within another filesystem namespace. The term "contentless file" is used herein to refer to a representation, stored in a container image, of a file, where the representation includes metadata describing the file but no content of the file.

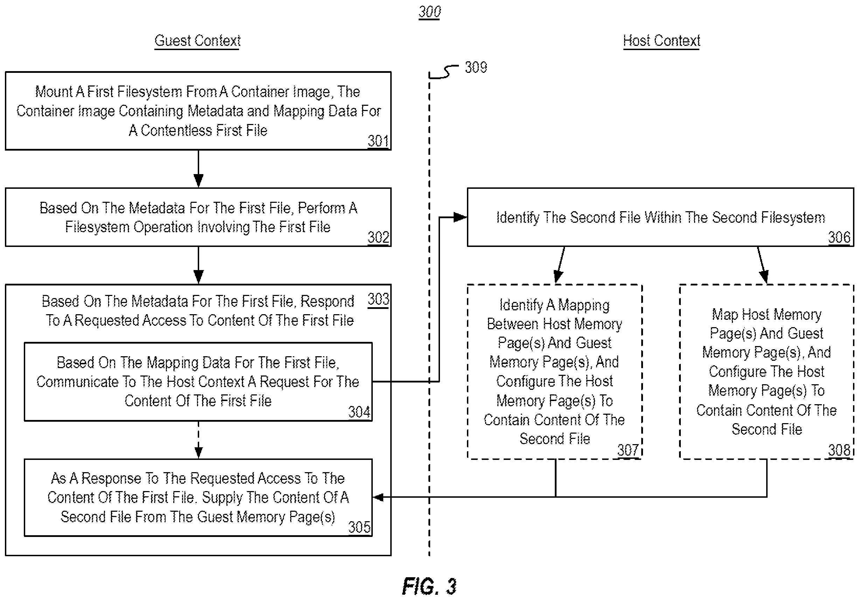

For example, Figure 2 illustrates another example filesystem namespace 210 which, in the context of computer architecture 100, is a filesystem namespace that is accessible to a host context 107, but which is generally inaccessible to the guest context 108 containing container image 201. For instance, filesystem namespace 210 might be stored in host storage 104b or in NAS 105a. In example 200, namespace 210 includes a filesystem hierarchy comprising two directories 211 (i.e., directories 211a and 211b) and one file 212. File 212 is shown as having associated filesystem metadata 213 and file content 214. An arrow 215, which extends from mapping data 204 to file 209c in namespace 207 and file 212 in namespace 210, indicates that the mapping data 204 in container image 201 includes information that is usable (e.g., by the host context 107) to determine that the content 214 of file 212 is usable as the content for file 209c. As such, arrow 216 indicates that, when file 209c is read by a container image filesystem 118b within a guest context 108, the container image filesystem 118b reads content 214 from file 212. Techniques for accomplishing this are described in more detail hereinafter during the discussion of Figure 3.

Mapping data 204 can take a variety of forms, such as one or more of: a relative path; a file identifier such as a file name; a hash over one more of: the desired file contents, metadata for the file, file version, file size, a "salt"; file record identifier within namespace 210, such as an inode or a Master File Table (MFT) File Record; etc. For example, for file 209c, the mapping data 204 might indicate a relative path and a file name. In embodiments, this relative path includes, for instance, the names of directories 208a and 208b, and the name of file 209c. The host context 107 is capable of identifying file 212 from this information if corresponding names match in namespace 210 (e.g., if the names of directories 208a and 211a are the same, if the names of directories 208c and 211b are the same, and if the names of files 209c and 212 are the same). As another example, for file 209c, the mapping data 204 might indicate a hash of contents 214. The host context 107 could identify file 212 from this information by utilizing the same hashing algorithm to identify any file in namespace 210 whose contents produce this hash value.

To further describe the forgoing concepts, Figure 3 illustrates a flow chart of an example, method 300 for using metadata for a contentless file to provide a guest context access to file content associated with the contentless file. Method 300 will be described with respect to the components and data of computer architecture 100 and example 200. Method 300 shows acts performed by a guest context (e.g., guest context 108a), and acts performed by a host context (e.g., host context 107). In embodiments, the guest context is a VA-backed virtual machine, though method 300 may be applicable to other containerization technologies. A vertical dashed line 309 between these contexts indicates a boundary between these contexts. Thus, any time an arrow crosses this line 309, a context switch is indicated-i.e., a context switch from the context containing the origin of the arrow to the context containing the point of the arrow.

As shown, method 300 comprises an act 301 (at the guest context) of mounting a first filesystem from a container image, the container image containing metadata and mapping data for a contentless first file. Act 301 can include mounting a first filesystem namespace from a container image that includes (i) metadata defining one or more filesystem properties of a first file contained within the first filesystem namespace, the container image lacking content of the first file; and (ii) mapping data that includes information usable to identify a second file within a second filesystem namespace that is external to the guest context, and from which the content of the first file is obtainable. For example, the container image filesystem 118a within guest context 108a can mount a first namespace from container image 116a, which can be backed by image data stored in container image(s) 104a and made available to the guest context 108a via the container manager 106. Referring to Figure 2, in an example, the container image filesystem 118a mounts namespace 207 (i.e., the first namespace) from container image 201. As discussed, container image 201 can include a metadata region 203 which stores filesystem metadata for namespace 207, including for contentless file 209c (i.e., the first file). Container image 201 can also include a mapping data region 204 which stores mapping data that enables the host context 107 to locate file 212 (i.e., the second file) within namespace 210 (i.e., the second namespace), the content of which can be used as the content for file 209c.

As discussed in connection with Figure 2, mapping data 204 can take a variety of forms, such as a relative path, a file identifier, a hash, a file record identifier, etc. As such, in embodiments of method 300, the information usable to identify the second file within the second filesystem namespace comprises at least one of a path within the second filesystem namespace, a file name identifier within the second filesystem namespace, a hash based on the second file, or a file record within the second filesystem namespace.

Method 300 also comprises an act 302 (at the guest context) of, based on the metadata for the first file, performing a filesystem operation involving the first file. Act 302 can include, based on the one or more filesystem properties of the first file, performing a filesystem operation involving the first file without switching to a host context at the computer system. For example, the container image filesystem 118a can utilize the metadata region 203 to perform one or more filesystem operations within namespace 207, which operations can involve file 209c. For example, the container image filesystem 118a might enumerate file 209c when performing a directory listing of directory 208c, might read and/or write one or more attributes of file 209c, might move file 209c to a different directory 208, etc. In embodiments, act 302 is triggered by request made to container image filesystem 118a by one or more of process(es) 115a. Notably, in Figure 3, there is no arrow extending from act 302 to any act performed within the host context (which, if present, would cross line 309). As such, in embodiments, act 302 can be performed entirely within guest context 108a, and need not involve any context switch to host context 107.

Method 300 also comprises an act 303 (at the guest context) of, based on the metadata for the first file, responding to a requested access to content of the first file. Act 303 can include, based on the one or more filesystem properties of the first file, responding to a requested access to the content of the first file. As shown, act 303 comprises an act 304 (at the guest context) of, based on the mapping data for the first file, communicating to the host context a request for the content of the first file, and an act 305 (at the guest context) of, as a response to the requested access to the content of the first file, supplying the content of a second file from the guest memory page(s).

Act 304 can include, based on the mapping data, communicating, to the host context, a request for the host context to supply the content of the first file to the guest context. For example, the guest OS 117a can communicate some request to the host context 107, which causes the host context 107 to supply the omitted content of file 209c to the guest context 108a. Notably, in Figure 3, there is an arrow extending from act 304 in the guest context into the host context, crossing line 309. As such, at some point during, or after act 304, there is a context switch from the guest context to the host context (e.g., from guest context 108a to host context 107). In embodiments, communicating the request for the host context to supply the content of the first file to the guest context triggers the context switch to the host context. The particular form of this communication could vary depending on the particular container management system being used, and/or based on design and implementation choices.

In some embodiments, communicating the request to the host context is in the form of a memory page fault by the guest OS 117a, which page fault is triggered by the guest OS 117a attempting to access guest context memory page that has been allocated by the guest context 108a for storing contents of the first file. In this embodiment, the container image filesystem 118a causes one or more memory pages within the guest context 108 to be allocated for storing contents of the first file (e.g., file 209c). Since these memory pages are allocated within the guest context 108a, they are accessible to the guest context 108a based on one or more GPA's. As an example, when the container image filesystem 118a mounts the first namespace (e.g., namespace 207) from container image 116a (e.g., container image 201) in act 301, the container image filesystem 118a requests that the guest OS 117a allocate one or more guest memory pages for storing the contents of the first file. However, since mapping data 204 is present for the first file in the mounted container image 116a, the container image filesystem 118a can cause these guest memory pages to be marked invalid. Then, when the container image filesystem 118a causes an actual access to one of these allocated guest memory pages (e.g., based on accessing a GPA), the guest OS 117a can trigger a memory page fault (i.e., since the page is invalid), which is then handled by the host context 107 after a context switch. Thus, in embodiments, in act 302, the guest context mounting the first filesystem namespace from the container image comprises the guest context reserving the one or more guest context memory pages for accessing the first file. Then, in act 304, the guest context communicating the request for access to file content of the second file to the host context comprises the guest context initiating a page fault on the one or more guest context memory pages upon an attempted access to the first file. Using a memory page fault to communicate the request to the host context is found to be a robust and efficient way of communicating with the host context.

In other embodiments, communicating the request to the host context is in the form of an express message sent from the guest context 108a to the host context 107, including a portion of mapping data 204. As used herein, an "express message" is a message sent from the guest context 108a to the host context 107 for the express purpose of obtaining the content of a contentless file. In an example, the container image filesystem 118a uses the container bus 120a to send a message to the host context 107, or uses some network filesystem 119a, such as Server Message Block (SMB) or Network File System (NFS) to send a message to the host context 107. Either way, the container manager 106 can communicate this message to the host context 107 (e.g., to container bus 114 at the host context 107, to a network server running at the host context 107, etc.). Since sending this message involves the container manager 106, this would typically involve making a context switch from the guest context 108a to the host context 107. In embodiments, the message includes mapping information for the first file, as obtained from the mapping data 204. Thus, in embodiments, in act 304, the guest context communicating the request for access to the file content of the second file to the host context comprises the guest context sending a message to the host context, the message including the information usable to identify the second file within the second filesystem namespace. In embodiments, the guest context sending the message to the host context comprises the guest context performing at least one of: calling an application programming interface (API) of a network filesystem (e.g., network filesystem 119a), or calling an API of a container management system (e.g., container bus 120a). Using an express message is a flexible and efficient way of communicating the request to the host context.

In Figure 3, there is also an arrow extending from the host context to act 304 in the guest context, again crossing line 309. As such, at some point prior to act 305, there is another context switch from the host context back to the guest context (e.g., from host context 107 to guest context 108a). Act 305 can include, after returning from a context switch to the host context, responding to the requested access based at least on supplying content of the second file from one or more guest context memory pages, the one or more guest context memory pages mapped to one or more host context memory pages containing the content of the second file. For example, the container image filesystem 118a can read the content 214 of file 212 from one or more guest context memory pages. These guest context memory pages contain the content 214 of file 212, because the host context 107 has mapped one or more host memory pages containing this content 214 to those guest memory pages. Then, after reading this content 214 from the guest memory pages, the container image filesystem 118a can use this data when responding to the requested access.

Method 300 also shows acts performed by the host context between acts 304 and 305 in the guest context. For example, as shown, based at least on performance of act 304 in the guest context, method 300 can comprise an act 306 (at the host context) of identifying the second file within the second filesystem. Act 306 can include, based on receiving the request from the guest context, identifying the second file within the second filesystem namespace. For example, based on the communication of act 304 from the guest context 108a to the host context 107, the host OS 110 can identify file 212 (i.e., the second file) within namespace 210 (i.e., the second filesystem). The particular manner for the host OS 110 identifying the second file can vary depending on the nature of the communication of act 304.

For example, as explained, in embodiments the guest context communicating the request for access to file content of the second file to the host context in act 304 comprises the guest context initiating a page fault on the one or more guest context memory pages upon an attempted access to the first file. In embodiments, the host OS 110 then uses the container image filesystem 113 at the host 107 to access the container image 116a (e.g., from container images 104a), including accessing the mapping data within the container image. In addition, the host OS 110 identifies the first file (e.g., file 209c) in the first filesystem (e.g., namespace 207) to which the page fault applies (e.g., from information in the page fault itself, and/or by accessing the guest context 108a's mapping table information). Then, the host OS 110 accesses the mapping data relevant to the first file, and uses that mapping data to identify the second file (e.g., file 212) in the second filesystem (e.g., namespace 210). Thus, in act 306, the host context identifying the second file within the second filesystem namespace can be based on the mapping data. By having the host OS access the mapping data in the container image in response to a page fault, and by having the host OS identify the second file based on this access mapping data, these embodiments reduce complexity at the guest context and help ensure security of the second filesystem since the host OS fully determines which mapping data to use and which file within the second filesystem is identified by that mapping data.

In another example, as explained, in embodiments the guest context communicating the request for access to the file content of the second file to the host context in act 304 comprises the guest context sending a message to the host context, the message including the information usable to identify the second file within the second filesystem namespace. In embodiments, the host OS 110 then uses this supplied mapping information to identify the second file (e.g., file 212) in the second filesystem (e.g., namespace 210). For security, in embodiments, the host OS 110 additionally verifies the mapping data provided by the guest context 108a by using the container image filesystem 113 to access the mapping data within the container image 116a (e.g., from container images 104a). By having the guest context provide the mapping data to the host OS, these embodiments reduce complexity at the host OS. Furthermore, having the host OS verify the mapping data further ensures security of the second filesystem.

As shown, after act 306, method 300 can proceed to at least one of (i) an act 307 of identifying a mapping between host memory page(s) and guest memory page(s), and configuring the host memory page(s) to contain content of the second file, or (ii) an act 308 of mapping host memory page(s) and guest memory page(s), and configuring the host memory page(s) to contain content of the second file. In either case, the contents of the second file are made available to the guest context by mapping memory pages in system memory containing the contents of the second file for use by the guest context. In embodiments, this includes a mapping between one or more guest context memory pages that are guest physical memory pages and one or more host context memory pages that are at least one of host physical memory pages or host virtual memory pages. The particular choice of which of these acts is performed can depend on an existing state of memory page mappings at the host context.

For example, if the host context 107's memory manager 112 has already made a mapping between one or more host context memory pages and one or more guest context memory pages that are usable by the guest context 108a to access the contents of the first file, then embodiments of method 300 proceed to act 307, which can include identifying a mapping between the one or more host context memory pages and the one or more guest context memory pages, and configuring the one or more host context memory pages to contain the content of the second file. For example, after identifying an existing mapping between host and guest memory pages, the host OS 110 can load the contents of the second file into the host memory pages. By virtue of the mapping, the contents of the second file become visible to the guest context 108a within the guest memory pages.

If, on the other hand, there not is already a mapping between the one or more host context memory pages and the one or more guest context memory pages, then embodiments of method 300 proceed to act 308, which can include mapping the one or more host context memory pages to the one or more guest context memory pages, and configuring the one or more host context memory pages to contain the content of the second file. For example, the host OS 110 can use its memory manager 112 to create a mapping between host and guest memory pages, and load the contents of the second file into the host memory pages. Again, by virtue of the mapping, the contents of the second file become visible to the guest context 108a within the guest memory pages.

Notably, if the communication of act 304 was a page fault, then the guest context 108a would already have knowledge of the identity of the one or more guest memory pages. For example, as discussed, when the container image filesystem 118a mounts the first namespace from the container image 116a in act 301, in embodiments the container image filesystem 118a requests that the guest OS 117a allocate one or more guest memory pages for storing the contents of the first file. If the communication of act 304 was a message sent from the guest context 108a to the host context 107, the one or more guest memory pages might not have already been allocated by the guest OS 117a. In this case, in embodiments the host OS 110 communicates an identity of these memory pages to the guest OS 117a (e.g., via the container bus 114).

Notably, the host context 107 might access the second file either from local storage (e.g., host storage 104b) or from remote storage (e.g., NAS 105a). Thus, in embodiments of act 306, the second filesystem namespace is accessed by the host context from a source external to the computer system, or from a source local to the computer system. If the second file is accessed from a source external to the computer system, in embodiments the host OS 110 utilizes remote direct memory access (RDMA) technology to fill the host memory pages. Thus, in embodiments, in acts 307 and 308, configuring the one or more host context memory pages to contain the content of the second file comprises filling the file content of the second file into the one or more host context memory pages by RDMA.

Accordingly, the embodiments described herein enable a guest context to consume and manage file metadata without incurring the performance penalties of context switching to a host context, and also enable the guest and host contexts to share common file content data. Thus, the embodiments described herein provide a dual technical advantage of (i) enabling the guest context to perform metadata operations on a file stored external to the guest context without incurring context switches to a host context, while at the same time (ii) avoiding duplication (both in storage and memory) of that file when it is shared by multiple contexts.

Although the subject matter has been described in language specific to structural features and/or methodological acts, it is to be understood that the subject matter defined in the appended claims is not necessarily limited to the described features or acts described above, or the order of the acts described above. Rather, the described features and acts are disclosed as example forms of implementing the claims. In addition, although the methodological acts may have been discussed in a certain order, and may have been illustrated in a flow chart as occurring in a particular order, no particular ordering is required unless specifically stated, or required because an act is dependent on another act being completed prior to the act being performed.

Embodiments of the present invention may comprise or utilize a special-purpose or general-purpose computer system that includes computer hardware, such as, for example, one or more processors and system memory, as discussed in greater detail below. Embodiments within the scope of the present invention also include physical and other computer-readable media for carrying or storing computer-executable instructions and/or data structures. Such computer-readable media can be any available media that can be accessed by a general-purpose or special-purpose computer system. Computer-readable media that store computer-executable instructions and/or data structures are computer storage media. Computer-readable media that carry computer-executable instructions and/or data structures are transmission media. Thus, by way of example, and not limitation, embodiments of the invention can comprise at least two distinctly different kinds of computer-readable media: computer storage media and transmission media.

Computer storage media are physical storage media that store computer-executable instructions and/or data structures. Physical storage media include computer hardware, such as RAM, ROM, EEPROM, solid state drives ("SSDs"), flash memory, phase-change memory ("PCM"), optical disk storage, magnetic disk storage or other magnetic storage devices, or any other hardware storage device(s) which can be used to store program code in the form of computer-executable instructions or data structures, which can be accessed and executed by a general-purpose or special-purpose computer system to implement the disclosed functionality of the invention.

Transmission media can include a network and/or data links which can be used to carry program code in the form of computer-executable instructions or data structures, and which can be accessed by a general-purpose or special-purpose computer system. A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer system, the computer system may view the connection as transmission media. Combinations of the above should also be included within the scope of computer-readable media.

Further, upon reaching various computer system components, program code in the form of computer-executable instructions or data structures can be transferred automatically from transmission media to computer storage media (or vice versa). For example, computer-executable instructions or data structures received over a network or data link can be buffered in RAM within a network interface module (e.g., a "NIC"), and then eventually transferred to computer system RAM and/or to less volatile computer storage media at a computer system. Thus, it should be understood that computer storage media can be included in computer system components that also (or even primarily) utilize transmission media.

Computer-executable instructions comprise, for example, instructions and data which, when executed at one or more processors, cause a general-purpose computer system, special-purpose computer system, or special-purpose processing device to perform a certain function or group of functions. Computer-executable instructions may be, for example, binaries, intermediate format instructions such as assembly language, or even source code.

Those skilled in the art will appreciate that the invention may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, and the like. The invention may also be practiced in distributed system environments where local and remote computer systems, which are linked (either by hardwired data links, wireless data links, or by a combination of hardwired and wireless data links) through a network, both perform tasks. As such, in a distributed system environment, a computer system may include a plurality of constituent computer systems. In a distributed system environment, program modules may be located in both local and remote memory storage devices.

Those skilled in the art will also appreciate that the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources (e.g., networks, servers, storage, applications, and services). The definition of "cloud computing" is not limited to any of the other numerous advantages that can be obtained from such a model when properly deployed.

A cloud computing model can be composed of various characteristics, such as on-demand self-service, broad network access, resource pooling, rapid elasticity, measured service, and so forth. A cloud computing model may also come in the form of various service models such as, for example, Software as a Service ("SaaS"), Platform as a Service ("PaaS"), and Infrastructure as a Service ("IaaS"). The cloud computing model may also be deployed using different deployment models such as private cloud, community cloud, public cloud, hybrid cloud, and so forth.

Some embodiments, such as a cloud computing environment, may comprise a system that includes one or more hosts that are each capable of running one or more virtual machines. During operation, virtual machines emulate an operational computing system, supporting an OS and perhaps one or more other applications as well. In some embodiments, each host includes a hypervisor that emulates virtual resources for the virtual machines using physical resources that are abstracted from view of the virtual machines. The hypervisor also provides proper isolation between the virtual machines. Thus, from the perspective of any given virtual machine, the hypervisor provides the illusion that the virtual machine is interfacing with a physical resource, even though the virtual machine only interfaces with the appearance (e.g., a virtual resource) of a physical resource. Examples of physical resources including processing capacity, memory, disk space, network bandwidth, media drives, and so forth.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. When introducing elements in the appended claims, the articles "a," "an," "the," and "said" are intended to mean there are one or more of the elements. The terms "comprising," "including," and "having" are intended to be inclusive and mean that there may be additional elements other than the listed elements.

## Claims

1. A method, implemented at a computer system (100) that includes at least one processor (102), for using metadata for a contentless file to provide a guest context access to file content, the method comprising:
within a guest context (108a) at the computer system:
mounting (116a) a first filesystem namespace (207) from a container image (201) that includes (i) metadata (203) defining one or more filesystem properties of a first file (209c) contained within the first filesystem namespace, the container image lacking content of the first file; and (ii) mapping data (204) that includes information usable to identify a second file (212) within a second filesystem namespace (210) that is external to the guest context, and from which the content of the first file is obtainable;
based on the one or more filesystem properties of the first file, performing (118a) a filesystem operation involving the first file without switching to a host context (107) at the computer system; and
based on the one or more filesystem properties of the first file, responding (118a) to a requested access to the content of the first file, including:
based on the mapping data, communicating (117a), to the host context, a request for the host context to supply the content of the first file to the guest context; and
after returning from a context switch to the host context, responding (118a) to the requested access based at least on supplying content (214) of the second file from one or more guest context memory pages, the one or more guest context memory pages mapped to one or more host context memory pages containing the content of the second file.

2. The method of claim 1 comprising, within the host context: based on receiving the request from the guest context, identifying the second file within the second filesystem namespace; and based on identifying the second file within the second filesystem namespace, performing at least one of: identifying a mapping between the one or more host context memory pages and the one or more guest context memory pages, and configuring the one or more host context memory pages to contain the content of the second file; or mapping the one or more host context memory pages to the one or more guest context memory pages, and configuring the one or more host context memory pages to contain the content of the second file.

3. The method of claim 1 or claim 2, wherein the guest context mounting the first filesystem namespace from the container image comprises the guest context reserving the one or more guest context memory pages for accessing the first file, wherein the guest context communicating the request for access to file content of the second file to the host context comprises the guest context initiating a page fault on the one or more guest context memory pages upon an attempted access to the first file, and wherein the host context identifying the second file within the second filesystem namespace is based on the mapping data.

4. The method of claim 1 or claim 2, wherein the guest context communicating the request for access to the file content of the second file to the host context comprises the guest context sending a message to the host context, the message including the information usable to identify the second file within the second filesystem namespace.

5. The method of claim 4, wherein the guest context sending the message to the host context comprises the guest context performing at least one of:
calling an application programming interface (API) of a network filesystem; or
calling an API of a container management system.

6. The method of any preceding claim, wherein the information usable to identify the second file within the second filesystem namespace comprises at least one of a path within the second filesystem namespace, a file name identifier within the second filesystem namespace, a hash based on the second file, or a file record within the second filesystem namespace.

7. The method of any preceding claim, wherein the second filesystem namespace is accessed by the host context from a source external to the computer system.

8. The method of claim 7, wherein the one or more host context memory pages are filled with the file content of the second file by remote direct memory access.

9. The method of any preceding claim, wherein the guest context is a virtual address backed virtual machine, wherein the one or more guest context memory pages are guest physical memory pages, and wherein the one or more host context memory pages are at least one of host physical memory pages or host virtual memory pages.

10. A computer system that includes at least one processor and a computer readable media having stored thereon computer-executable instructions that are executable by the at least one processor to cause the computer system to perform a method for using metadata for a contentless file to provide a guest context access to file content, the method comprising, within a guest context at the computer system:
mounting (116a) a first filesystem namespace (207) from a container image (201) that includes (i) metadata (203) defining one or more filesystem properties of a first file (209c) contained within the first filesystem namespace, the container image lacking content of the first file; and (ii) mapping data (204) that includes information usable to identify a second file (212) within a second filesystem namespace (210) that is external to the guest context, and from which the content of the first file is obtainable;
based on the one or more filesystem properties of the first file, performing (118a) a filesystem operation involving the first file without switching to a host context (107) at the computer system; and
based on the one or more filesystem properties of the first file, responding (118a) to a requested access to the content of the first file, including:
based on the mapping data, communicating (117a), to the host context, a request for the host context to supply the content of the first file to the guest context; and
after returning from a context switch to the host context, responding (118a) to the requested access based at least on supplying content (214) of the second file from one or more guest context memory pages, the one or more guest context memory pages mapped to one or more host context memory pages containing the content of the second file.

11. The computer system of claim 10, further comprising, within the host context:
based on receiving the request from the guest context, identifying the second file within the second filesystem namespace; and
based on identifying the second file within the second filesystem namespace, performing at least one of:
identifying a mapping between the one or more host context memory pages and the one or more guest context memory pages, and configuring the one or more host context memory pages to contain the content of the second file; or
mapping the one or more host context memory pages to the one or more guest context memory pages, and configuring the one or more host context memory pages to contain the content of the second file.

12. The computer system of any of claims 10 to 11, further comprising reserving the one or more guest context memory pages for accessing the content of the first file, and wherein communicating the request for the host context to supply the content of the first file to the guest context comprises initiating a page fault on the one or more guest context memory pages upon an attempted access to the content of the first file.

13. The computer system of any of claims 10 to 11, wherein communicating the request for the host context to supply the content of the first file to the guest context comprises the guest context sending a message to the host context, the message including the information usable to identify the second file within the second filesystem namespace, the information usable to identify the second file within the second filesystem namespace comprising at least one of a path within the second filesystem namespace, a file name identifier within the second filesystem namespace, a hash based on the second file, or a file record within the second filesystem namespace.

14. The computer system of any of claims 10 to 13, wherein the guest context is a virtual address backed virtual machine, wherein the one or more guest context memory pages are guest physical memory pages, and wherein the one or more host context memory pages are at least one of host physical memory pages or host virtual memory pages.

15. The computer system of any of claims 10 to 14, wherein communicating the request for the host context to supply the content of the first file to the guest context triggers the context switch to the host context.

## Patentansprüche

1. Auf einem Computersystem (100) implementiertes Verfahren, das mindestens einen Prozessor (102) einschließt zum Verwenden von Metadaten für eine inhaltlose Datei, um einem Gast Kontextzugriff auf Dateiinhalt bereitzustellen, wobei das Verfahren Folgendes umfasst:
innerhalb eines Gastkontextes (108a) auf dem Computersystem:
Aufbauen (116a) eines ersten Dateisystem-Namensraums (207) von einem Container-Image (201), das Folgendes einschließt: (i) Metadaten (203), die eine oder mehrere Dateisystemeigenschaften einer ersten Datei (209c) definieren, die innerhalb des ersten Dateisystem-Namensraums enthalten ist, wobei dem Container-Image Inhalt der ersten Datei fehlt; und (ii) Zuordnungsdaten (204), die Informationen einschließen, die nutzbar sind, um eine zweite Datei (212) innerhalb eines zweiten Dateisystem-Namensraums (210) zu identifizieren, der zu dem Gastkontext extern ist und von dem der Inhalt der ersten Datei erhältlich ist;
basierend auf der einen oder den mehrere Dateisystemeigenschaften der ersten Datei, Durchführen (118a) einer Dateisystemoperation unter Beteiligung der ersten Datei ohne auf einen Hostkontext (107) auf dem Computersystem umzuschalten; und
basierend auf der einen oder den mehreren Dateisystemeigenschaften der ersten Datei, Antworten (118a) auf einen angeforderten Zugriff auf den Inhalt der ersten Datei, einschließend:
basierend auf den Zuordnungsdaten, Kommunizieren (117a) einer Anforderung für den Hostkontext an den Hostkontext, den Inhalt der ersten Datei an den Gastkontext abzugeben; und
nach Zurückkehren von einer Kontextumschaltung zu dem Hostkontext, Antworten (118a) auf den angeforderten Zugriff basierend mindestens auf Abgeben von Inhalt (214) der zweiten Datei von einer oder mehreren Gastkontext-Speicherseiten, wobei die eine oder die mehreren Gastkontext-Speicherseiten einer oder mehreren Hostkontext-Speicherseiten zugeordnet sind, die den Inhalt der zweiten Datei beinhalten.

2. Verfahren nach Anspruch 1, umfassend innerhalb des Hostkontextes: basierend auf Empfangen der Anforderung von dem Gastkontext, Identifizieren der zweiten Datei innerhalb des zweiten Dateisystem-Namensraums; und basierend auf Identifizieren der zweiten Datei innerhalb des zweiten Dateisystem-Namensraums, Durchführen von mindestens einem von: Identifizieren einer Zuordnung zwischen der einen oder den mehreren Hostkontext-Speicherseiten und der einen oder den mehreren Gastkontext-Speicherseiten, und Konfigurieren der einen oder der mehreren Hostkontext-Speicherseiten, damit sie den Inhalt der zweiten Datei beinhalten; oder Zuordnung der einen oder der mehreren Hostkontext-Speicherseiten zu der einen oder den mehreren Gastkontext-Speicherseiten, und Konfigurieren der einen oder der mehreren Hostkontext-Speicherseiten, damit sie den Inhalt der zweiten Datei beinhalten.

3. Verfahren nach Anspruch 1 oder Anspruch 2, wobei Aufbauen des Gastkontextes des ersten Dateisystem-Namensraums von dem Container-Image umfasst, dass der Gastkontext die eine oder die mehreren Gastkontext-Speicherseiten für Zugreifen auf die erste Datei reserviert, wobei Kommunizieren der Anforderung von Zugriff auf Dateiinhalt der zweiten Datei von dem Gastkontext an den Hostkontext umfasst, dass der Gastkontext nach einem versuchten Zugriff auf die erste Datei einen Seitenfehler auf der einen oder den mehreren Gastkontext-Speicherseiten initiiert, und wobei Identifizieren der zweiten Datei innerhalb des zweiten Dateisystem-Namensraums durch den Hostkontext auf den Zuordnungsdaten basiert.

4. Verfahren nach Anspruch 1 oder Anspruch 2, wobei Kommunizieren der Anforderung von Zugriff auf den Dateiinhalt der zweiten Datei von dem Gastkontext an den Hostkontext umfasst, dass der Gastkontext eine Nachricht an den Hostkontext sendet, wobei die Nachricht die Informationen einschließt, die nutzbar sind, um die zweite Datei innerhalb des zweiten Dateisystem-Namensraums zu identifizieren.

5. Verfahren nach Anspruch 4, wobei Senden der Nachricht von dem Gastkontext an den Hostkontext Durchführen von dem Gastkontext von mindestens einem des Folgenden umfasst:
Aufrufen einer Anwendungsprogrammierschnittstelle (API) eines Netzwerksdateisystems; oder
Aufrufen einer API eines Behältermanagementsystems.

6. Verfahren nach einem vorstehenden Anspruch, wobei die Informationen, die nutzbar sind, um die zweite Datei innerhalb des zweiten Dateisystem-Namensraums zu identifizieren, mindestens eines umfassen von einem Pfad innerhalb des zweiten Dateisystem-Namensraums, einer Dateinamenkennung innerhalb des zweiten Dateisystem-Namensraums, eines Hashs, der auf der zweiten Datei basiert, oder eines Dateisatzes innerhalb des zweiten Dateisystem-Namensraums.

7. Verfahren nach einem vorstehenden Anspruch, wobei von dem Hostkontext auf den zweiten Dateisystem-Namensraum von einer Quelle aus zugegriffen wird, die zu dem Computersystem extern ist.

8. Verfahren nach Anspruch 7, wobei die eine oder die mehreren Hostkontext-Speicherseiten mit dem Dateiinhalt der zweiten Datei durch direkten Remotespeicherzugriff gefüllt werden.

9. Verfahren nach einem vorstehenden Anspruch, wobei der Gastkontext eine von einer virtuellen Maschine gestützte virtuelle Adresse ist, wobei die eine oder die mehreren Gastkontext-Speicherseiten physische Gastspeicherseiten sind, und wobei die eine oder die mehreren Hostkontext-Speicherseiten mindestens eines sind von physischen Hostspeicherseiten oder virtuellen Hostspeicherseiten.

10. Computersystem, das mindestens einen Prozessor und ein computerlesbares Medium einschließt, das darauf gespeichert computerausführbare Anweisungen aufweist, die, von dem mindestens einen Prozessor ausführbar sind, m zu bewirken, dass das Computersystem ein Verfahren zum Verwenden von Metadaten für eine inhaltslose Datei durchführt, um einem Gast Kontextzugriff auf Dateiinhalt bereitzustellen, wobei das Verfahren innerhalb eines Gastkontextes auf dem Computersystem Folgendes umfasst:
Aufbauen (116a) eines ersten Dateisystem-Namensraums (207) von einem Container-Image (201), das Folgendes einschließt: (i) Metadaten (203), die eine oder mehrere Dateisystemeigenschaften einer ersten Datei (209c) definieren, die innerhalb des ersten Dateisystem-Namensraums enthalten ist, wobei dem Container-Image Inhalt der ersten Datei fehlt; und (ii) Zuordnungsdaten (204), die Informationen einschließen, die nutzbar sind, um eine zweite Datei (212) innerhalb eines zweiten Dateisystem-Namensraums (210) zu identifizieren, der zu dem Gastkontext extern ist und von dem der Inhalt der ersten Datei erhältlich ist;
basierend auf der einen oder den mehrere Dateisystemeigenschaften der ersten Datei, Durchführen (118a) einer Dateisystemoperation unter Beteiligung der ersten Datei ohne auf einen Hostkontext (107) auf dem Computersystem umzuschalten; und
basierend auf der einen oder den mehreren Dateisystemeigenschaften der ersten Datei, Antworten (118a) auf einen angeforderten Zugriff auf den Inhalt der ersten Datei, einschließend:
basierend auf den Zuordnungsdaten, Kommunizieren (117a) einer Anforderung für den Hostkontext an den Hostkontext, den Inhalt der ersten Datei an den Gastkontext abzugeben; und
nach Zurückkehren von einer Kontextumschaltung zu dem Hostkontext, Antworten (118a) auf den angeforderten Zugriff basierend mindestens auf Abgeben von Inhalt (214) der zweiten Datei von einer oder mehreren Gastkontext-Speicherseiten, wobei die eine oder die mehreren Gastkontext-Speicherseiten einer oder mehreren Hostkontext-Speicherseiten zugeordnet sind, die den Inhalt der zweiten Datei beinhalten.

11. Computersystem nach Anspruch 10, weiter umfassend, innerhalb des Hostkontextes:
basierend auf Empfangen der Anforderung von dem Gastkontext, Identifizieren der zweiten Datei innerhalb des zweiten Dateisystem-Namensraums; und
und basierend auf Identifizieren der zweiten Datei innerhalb des zweiten Dateisystem-Namensraums, Durchführen von mindestens einem von:
Identifizieren einer Zuordnung zwischen der einen oder den mehreren Hostkontext-Speicherseiten und der einen oder den mehreren Gastkontext-Speicherseiten, und Konfigurieren der einen oder der mehreren Hostkontext-Speicherseiten, damit sie den Inhalt der zweiten Datei beinhalten; oder
Zuordnen der einen oder der mehreren Hostkontext-Speicherseiten zu der einen oder den mehreren Gastkontext-Speicherseiten, und Konfigurieren der einen oder der mehreren Hostkontext-Speicherseiten, damit sie den Inhalt der zweiten Datei beinhalten.

12. Computersystem nach einem der Ansprüche 10 bis 11, weiter umfassend Reservieren der einen oder der mehreren Gastkontext-Speicherseiten für Zugriff auf den Inhalt der ersten Datei, und wobei Kommunizieren der Anforderung an den Hostkontext, den Inhalt der ersten Datei an den Gastkontext abzugeben, nach einem versuchten Zugriff auf den Inhalt der ersten Datei Initiieren eines Seitenfehlers auf der einen oder den mehreren Gastkontext-Speicherseiten umfasst.

13. Computersystem nach einem der Ansprüche 10 bis 11, wobei Kommunizieren der Anforderung an den Hostkontext, den Inhalt der ersten Datei an den Gastkontext abzugeben umfasst, dass der Gastkontext eine Nachricht an den Hostkontext sendet, wobei die Nachricht die Informationen einschließt, die nutzbar sind, um die zweite Datei innerhalb des zweiten Dateisystem-Namensraums zu identifizieren, wobei die Informationen, die nutzbar sind, um die zweite Datei innerhalb des zweiten Dateisystem-Namensraums zu identifizieren, mindestens eines umfassen von einem Pfad innerhalb des zweiten Dateisystem-Namensraums, einer Dateinamenkennung innerhalb des zweiten Dateisystem-Namensraums, eines Hashs, der auf der zweiten Datei basiert, oder eines Dateisatzes innerhalb des zweiten Dateisystem-Namensraums.

14. Computersystem nach einem der Ansprüche 10 bis 13, wobei der Gastkontext eine von einer virtuellen Maschine gestützte virtuelle Adresse ist, wobei die eine oder die mehreren Gastkontext-Speicherseiten physische Gastspeicherseiten sind, und wobei die eine oder die mehreren Hostkontext-Speicherseiten mindestens eines sind von physischen Hostspeicherseiten oder virtuellen Hostspeicherseiten.

15. Computersystem nach einem der Ansprüche 10 bis 14, wobei Kommunizieren der Anforderung an den Hostkontext, den Inhalt der ersten Datei an den Gastkontext abzugeben die Kontextumschaltung auf den Hostkontext auslöst.

## Revendications

1. Procédé, mis en oeuvre au niveau d'un système informatique (100) qui inclut au moins un processeur (102), d'utilisation de métadonnées pour un fichier sans contenu pour fournir à un contexte d'invité l'accès à un contenu de fichier, le procédé comprenant :
au sein d'un contexte d'invité (108a) au niveau du système informatique :
le montage (116a) d'un premier espace de noms de système de fichiers (207) à partir d'une image de conteneur (201) qui inclut (i) des métadonnées (203) définissant une ou plusieurs propriétés de système de fichiers d'un premier fichier (209c) contenu au sein du premier espace de noms de système de fichiers, l'image de conteneur étant dépourvue d'un contenu du premier fichier ; et (ii) le mappage de données (204) qui inclut des informations utilisables pour identifier un second fichier (212) au sein d'un second espace de noms de système de fichiers (210) qui est externe au contexte d'invité, et à partir duquel le contenu du premier fichier peut être obtenu ;
en se basant sur les une ou plusieurs propriétés de système de fichiers du premier fichier, la réalisation (118a) d'une opération de système de fichiers impliquant le premier fichier sans commutation vers un contexte hôte (107) au niveau du système informatique ; et
en se basant sur les une ou plusieurs propriétés de système de fichiers du premier fichier, la réponse (118a) à une demande d'accès au contenu du premier fichier, incluant :
en se basant sur les données de mappage, la communication (117a), au contexte d'hôte, d'une demande de fourniture par le contexte d'hôte du contenu du premier fichier au contexte d'invité ; et
après retour d'une commutation de contexte vers le contexte d'hôte, la réponse (118a) à la demande d'accès en se basant au moins sur la fourniture d'un contenu (214) du second fichier à partir d'une ou plusieurs pages de mémoire de contexte d'invité, les une ou plusieurs pages de mémoire de contexte d'invité étant mappées sur une ou plusieurs pages de mémoire de contexte d'hôte contenant le contenu du second fichier.

2. Procédé selon la revendication 1 comprenant, au sein du contexte d'hôte : en se basant sur la réception de la demande provenant du contexte d'invité, l'identification du second fichier au sein du second espace de noms de système de fichiers ; et en se basant sur l'identification du second fichier au sein du second espace de noms de système de fichiers, la réalisation d'au moins un parmi : l'identification d'un mappage entre les une ou plusieurs pages de mémoire de contexte d'hôte et les une ou plusieurs pages de contexte d'invité, et la configuration des une ou plusieurs pages de contexte d'hôte pour qu'elle(s) contienne(nt) le contenu du second fichier ; ou le mappage des une ou plusieurs pages de mémoire de contexte d'hôte sur les une ou plusieurs pages de mémoire de contexte d'invité, et la configuration des une ou plusieurs pages de mémoire de contexte d'hôte pour qu'elle(s) contienne(nt) le contenu du second fichier.

3. Procédé selon la revendication 1 ou la revendication 2, dans lequel le montage par le contexte d'invité du premier espace de noms de système de fichiers à partir de l'image de conteneur comprend la réservation par le contexte d'invité des une ou plusieurs pages de mémoire de contexte d'invité pour accéder au premier fichier, dans lequel la communication par le contexte d'invité de la demande d'accès à un contenu de fichier du second fichier au contexte d'hôte comprend la création par le contexte d'invité d'une erreur de page sur les une ou plusieurs pages de mémoire de contexte d'invité lors d'une tentative d'accès au premier fichier, et dans lequel l'identification par le contexte d'hôte du second fichier au sein du second espace de noms de système de fichiers est basée sur les données de mappage.

4. Procédé selon la revendication 1 ou la revendication 2, dans lequel la communication par le contexte d'invité de la demande d'accès au contenu de fichier du second fichier au contexte d'hôte comprend l'envoi par le contexte d'invité d'un message au contexte d'hôte, le message incluant les informations utilisables pour identifier le second fichier au sein du second espace de noms de système de fichiers.

5. Procédé selon la revendication 4, dans lequel l'envoi par le contexte d'invité du message au contexte d'hôte comprend la réalisation par le contexte d'invité d'au moins un parmi :
l'appel d'une interface de programmation d'applications (API) d'un système de fichiers de réseau ; ou
l'appel d'une API d'un système de gestion de conteneur.

6. Procédé selon une quelconque revendication précédente, dans lequel les informations utilisables pour identifier le second fichier au sein du second espace de noms de système de fichiers comprend au moins un d'une voie au sein du second espace de noms de système de fichiers, d'un identifiant de nom de fichier au sein du second espace de noms de système de fichiers, d'une empreinte numérique basée sur le second fichier ou d'un enregistrement de fichier au sein du second espace de noms de système de fichiers.

7. Procédé selon une quelconque revendication précédente, dans lequel le contexte d'hôte accède au second espace de noms de système de fichiers à partir d'une source externe au système informatique.

8. Procédé selon la revendication 7, dans lequel les une ou plusieurs pages de mémoire de contexte d'hôte sont remplies avec le contenu de fichier du second fichier par accès direct à la mémoire à distance.

9. Procédé selon une quelconque revendication précédente, dans lequel le contexte d'invité est une machine virtuelle basée sur une adresse virtuelle, dans lequel les une ou plusieurs pages de mémoire de contexte d'invité sont des pages de mémoire physiques d'invité, et dans lequel les une ou plusieurs pages de mémoire de contexte d'hôte sont au moins une de pages de mémoire physiques d'hôte ou de pages de mémoire virtuelles d'hôte.

10. Système informatique qui inclut au moins un processeur et un support lisible par ordinateur sur lequel sont stockées des instructions exécutables par ordinateur qui sont exécutables par le au moins un processeur pour amener le système informatique à réaliser un procédé d'utilisation de métadonnées pour un fichier sans contenu pour fournir à un contexte d'invité l'accès à un contenu de fichier, le procédé comprenant, au sein d'un contexte d'invité au niveau du système informatique :
le montage (116a) d'un premier espace de noms de système de fichiers (207) à partir d'une image de conteneur (201) qui inclut (i) des métadonnées (203) définissant une ou plusieurs propriétés de système de fichiers d'un premier fichier (209c) contenu au sein du premier espace de noms de système de fichiers, l'image de conteneur étant dépourvue d'un contenu du premier fichier ; et (ii) le mappage de données (204) qui inclut des informations utilisables pour identifier un second fichier (212) au sein d'un second espace de noms de système de fichiers (210) qui est externe au contexte d'invité, et à partir duquel le contenu du premier fichier peut être obtenu ;
en se basant sur les une ou plusieurs propriétés de système de fichiers du premier fichier, la réalisation (118a) d'une opération de système de fichiers impliquant le premier fichier sans commutation vers un contexte hôte (107) au niveau du système informatique ; et
en se basant sur les une ou plusieurs propriétés de système de fichiers du premier fichier, la réponse (118a) à une demande d'accès au contenu du premier fichier, incluant :
en se basant sur les données de mappage, la communication (117a), au contexte d'hôte, d'une demande de fourniture par le contexte d'hôte du contenu du premier fichier au contexte d'invité ; et
après retour d'une commutation de contexte vers le contexte d'hôte, la réponse (118a) à la demande d'accès en se basant au moins sur la fourniture d'un contenu (214) du second fichier à partir d'une ou plusieurs pages de mémoire de contexte d'invité, les une ou plusieurs pages de mémoire de contexte d'invité étant mappées sur une ou plusieurs pages de mémoire de contexte d'hôte contenant le contenu du second fichier.

11. Système informatique selon la revendication 10, comprenant en outre, au sein du contexte d'hôte :
en se basant sur la réception de la demande provenant du contexte d'invité, l'identification du second fichier au sein du second espace de noms de système de fichiers ; et
en se basant sur l'identification du second fichier au sein du second espace de noms de système de fichiers, la réalisation d'au moins un parmi :
l'identification d'un mappage entre les une ou plusieurs pages de mémoire de contexte d'hôte et les une ou plusieurs pages de mémoire de contexte d'invité, et la configuration des une ou plusieurs pages de mémoire de contexte d'hôte pour qu'elle(s) contienne(nt) le contenu du second fichier ; ou
le mappage des une ou plusieurs pages de mémoire de contexte d'hôte sur les une ou plusieurs pages de mémoire de contexte d'invité, et la configuration des une ou plusieurs pages de mémoire de contexte d'hôte pour qu'elle(s) contienne(nt) le contenu du second fichier.

12. Système informatique selon une quelconque des revendications 10 à 11, comprenant en outre la réservation des une ou plusieurs pages de mémoire de contexte d'invité pour accéder au contenu du premier fichier, et dans lequel la communication de la demande de fourniture par le contexte d'hôte du contenu du premier fichier au contexte d'invité comprend la création d'une erreur de page sur les une ou plusieurs pages de mémoire de contexte d'invité lors d'une tentative d'accès au contenu du premier fichier.

13. Système informatique selon une quelconque des revendications 10 à 11, dans lequel la communication de la demande de fourniture par le contexte d'hôte du contenu du premier fichier au contexte d'invité comprend l'envoi par le contexte d'invité d'un message au contexte d'hôte, le message incluant les informations utilisables pour identifier le second fichier au sein du second espace de noms de système de fichiers, les informations utilisables pour identifier le second fichier au sein du second espace de noms de système de fichiers comprenant au moins un d'une voie au sein du second espace de noms de système de fichiers, d'un identifiant de nom de fichier au sein du second espace de noms de système de fichiers, d'une empreinte numérique basée sur le second fichier ou d'un enregistrement de fichier au sein du second espace de noms de système de fichiers.

14. Système informatique selon une quelconque des revendications 10 à 13, dans lequel le contexte d'invité est une machine virtuelle basée sur une adresse virtuelle, dans lequel les une ou plusieurs pages de mémoire de contexte d'invité sont des pages de mémoire physiques d'invité, et dans lequel les une ou plusieurs pages de mémoire de contexte d'hôte sont au moins une de pages de mémoire physiques d'hôte ou de pages de mémoire virtuelles d'hôte.

15. Système informatique selon une quelconque des revendications 10 à 14, dans lequel la communication de la demande de fourniture par le contexte hôte du contenu du premier fichier au contexte d'invité déclenche la commutation de contexte vers le contexte d'hôte.
